# EUROPEAN PATENT APPLICATION

(11) **EP 1 263 157 A2**
(43) Date of publication of application: **04.12.2002**
(21) Application number: 02010176.2
(22) Date of filing: 14.05.2002
(51) Int. Cl.: H04H 9/00

(54) **Method and server for the selection of participants to a program**

(30) Priority: 31.05.2001 JP 2001165539
(71) Applicant: NTT DoCoMo, Inc., Tokyo 100-6150 (JP)
(72) Inventor: Nagaoka, Tatsuji, NTT DoCoMo, Inc., Chiyoda-ku, Tokyo 100-6150 (JP); Nakayama, Kenji, NTT DoCoMo, Inc., Chiyoda-ku, Tokyo 100-6150 (JP); Nomura, Kazuo, NTT DoCoMo, Inc., Chiyoda-ku, Tokyo 100-6150 (JP); Kondo, Hiromi, NTT DoCoMo, Inc., Chiyoda-ku, Tokyo 100-6150 (JP)
(74) Representative: HOFFMANN - EITLE

(57) **Abstract**

On the application page for participating in participation application server PS, as a user applies for participating in a program by using mobile unit MS, participation application server PS determines whether to give the user of the mobile unit MS the right to participate in the program. Then, the "win application" is transmitted to mobile unit MS of users who are allowed to participate, and the "defeat application" is transmitted to the mobile unit MS of users who are not allowed to participate. As a result, an event occurs in mobile unit MS, whereby the program participation page is transmitted to mobile unit MS to which the "win application" was transmitted after the transmission of the "win" application. Finally, the program to be broadcast is changed in accordance with the information inputted by users of mobile unit MS on the program participation page.

## Description

### Technical Field

The present invention relates to methods for narrowing the number of program participants from a plurality of users who apply for participating in a program of the audience participation type to a pre-determined number of users, and a preferred server used for this method.

### Background Art

In recent years, with the increase in popularity and use of communication terminals such as cellular telephones or PC (personal computer), several kinds of systems utilizing communication terminals through which users can participate in television programs of the audience participation type have been proposed. One example of this type of system is, for instance, the one in which a server owned by a broadcasting station provides the television program web page through which answers for a quiz and so forth can be given by users who wish to participate. However, in this system, a great number of people log onto the server while the television program is on, and there is a possibility that the server gets overwhelmed with the input overload. Therefore, in order to prevent the breakdown of the server in this type of system, participants allowed to participate in the program are narrowed out beforehand.

Two commonly used methods for narrowing the number of participants of a program are one, by following the order in which participation applications were received, and the second, by drawing. However, in these methods, the audiences apply for program participation through participation application on the web page of the broadcasting station and so forth, and at the broadcasting station, the audiences who can participate in the program were narrowed unilaterally out of the audiences who applied. This greatly decreases the level of enjoyment the audience could experience. Consequently, it is possible that the number of audience members who apply for participating in television programs decreases. Unless members of the audience have a strong intention and desire to participate in television programs, the audience rate of television programs may decrease.

The present invention was developed under the above mentioned circumstances, and its object is to provide methods for narrowing down the number of audience members who are allowed to participate in a television program, which provide entertainment to participation applicants even while following the procedure of participation application for the program, thereby, stimulating the desire of the audience to participate in the program; and the preferable server to be used for these methods.

### Disclosure of Invention

The present invention was developed with a view to overcoming the problem of the prior art mentioned above. The present invention provides a program participant narrowing method which comprises a participation application process for a communication terminal to transmit a user's participation application for a program to a server; a narrowing process for determining by at least one of the communication terminal or the server, whether to allow the user to participate in the program; an application program transmitting- process for the server to transmit to the communication terminal which transmitted the participation application, an application program providing entertaining activity to the user; and a process for a communication terminal of a user who is allowed to participate in the program in the narrowing process for obtaining from the server necessary address information for participating in the program.

The program participant narrowing method of the present invention, provides an entertaining form of participation application process to be followed by user and as a result stimulating the user's desire to participate in a program.

In one preferred embodiment, the narrowing process is executed before the application program transmitting process is carried out, and the server transmits to the communication terminal during the application program transmitting process, an application program providing the user with an entertaining procedure for narrowing program participant containing a win/defeat outcome corresponding to the content of a game determined by the narrowing process.

In this case, it is preferable to allow users to participate in the program on the basis of whether they meet the specified requirement.

Also, in another preferred embodiment, the server attaches to the application program address information showing the address of information required for participating in the program, when it transmits during the application program transmitting process to the communication terminal, the application program providing the user with an entertaining procedure for narrowing program participant containing a win outcome on the basis of which the participant narrowing process determines whether to allow the user to participate in the program.

Also, in another preferred embodiment, the narrowing process is carried out in the server, and the program participant narrowing method comprises a process for the communication terminal which receives an application program transmitted during the application program transmitting process for obtaining from the server the content of the game to be played by the participant, which is determined by the narrowing process of the program participant narrowing method; and a process for the communication terminal providing the user with an entertaining procedure for narrowing participant containing a win/defeat outcome on the basis of the received application program and the determination obtained from the server, and displaying address information showing an address of information required for participating in the program when it provides the user with an entertaining procedure for narrowing program participant containing a win outcome corresponding to a decision to allow the user for participating in the program.

In the narrowing process, the server can select at random, users for participating in a program.

Also, in another embodiment, the application program comprises data providing a user with an entertaining procedure for narrowing program participant with different outcomes dependent on pre-set parameters, and the narrowing process comprises a process providing the user with an entertaining activity by executing the application program by setting up information retained by the communication terminal as the parameter; a process for the communication terminal for transmitting to the server data corresponding to the outcome of the game played by the user; and a process for the server for determining whether to allow the user to participate in the program on the basis of data transmitted from the communication terminal.

Through the program participant narrowing method of the present invention it is possible to stimulate the user's desire to participate in the program because of the entertaining nature of the participant narrowing procedure which makes the selection of participants by for instance, whether the telephone number of the mobile unit of the user accords with the requirement and further maintaining the entertaining nature of participation application, instead of the method of narrowing program participants on the basis of a predetermined requirement given by the broadcasting station.

Also, in another preferred embodiment, the application program comprises data providing a user with a game to be played which proceeds when a particular operation is performed through the communication terminal; and the narrowing process comprises a process for the communication terminal for carrying out the game on the basis of an operation performed on the application program through the communication terminal, a process for the communication terminal for transmitting to the server data corresponding to the outcome of the game, and a process for the server for making a decision on whether to allow the user to participate in the program on the basis of data transmitted from the communication terminal.

The program participant narrowing method of the present invention stimulates the user's desire to participate in a program by giving the user the feeling that the user has won the right to participate in the program because of the user's own effort and capability, where narrowing participant for the program is carried out by a ranking of the game's outcome.

In each of the above mentioned embodiments, the communication terminal can transmit the participation application with personal information on a user of the communication terminal added to the participation application during the participation application transmitting process.

Also, in another preferred embodiment, the program participant narrowing method further comprises a personal information outputting process for the server for outputting personal information transmitted from the communication terminal during the participation application transmitting process after being added to the participation application to outside which is carried out after the participation application transmitting process.

In each of the above mentioned embodiments, the communication terminal, for instance, is a cellular telephone which performs communication with the server via a mobile communication network.

Also, another aspect of the present invention is that it provides a server comprising a communication unit; and a controlling unit for receiving participation application for a program from a communication terminal via the communication unit determining whether to allow a user of the communication terminal to participate in the program, transmitting an application program from the communication unit to the communication terminal for providing a user with an entertaining procedure for narrowing program participant containing an outcome corresponding to the rejection of a user's participation in a program when it makes a decision to reject participation, and providing a user with an entertaining procedure for narrowing program participant containing an outcome corresponding to a permission given for participation in a program, and transmitting an application program from the communication unit to the communication terminal containing access information showing an address of information required for participating in the program when it makes a decision to permit participation.

In another preferred embodiment, the controlling unit determines whether to allow participation in the program by whether a user of the communication terminal meets a predetermined requirement.

Also, the present invention provides a server which comprises a communication unit; and a controlling unit for receiving participation application for a program from a communication terminal via the communication unit, providing a user of the communication terminal with an entertaining procedure for narrowing program participants containing an outcome corresponding to a decision on whether to give permission to participate in the program when the decision is given, transmitting an application program from the communication unit to the communication terminal when permission to participate in the program is given, which makes the use of access information showing an address of information required for participating in the program, making a decision on whether to allow the user to participate in the program when a request for the information on the decision is received from the communication terminal via the communication unit and transmitting that outcome to the communication terminal as the information on the decision.

In another preferred embodiment, the controlling unit makes a decision on whether to allow a user to participate in the program depending on if a user of the communication terminal meets a predetermined requirement.

Also, the present invention provides a server which comprises a communication unit; and a controlling unit for receiving participation application for a program from a communication terminal via the communication unit, making a decision on whether to allow or refuse a user participation in the program on the basis of a parameter retained by the communication terminal, providing a user of the communication terminal with an entertaining activity yielding an outcome corresponding to a decision, and further transmitting from the communication unit to the communication terminal an application program for acquisition of information required for participating in the program when participation is allowed.

Also, the present invention provides a server which comprises a communication unit and a controlling unit for transmitting from the communication unit to the communication terminal an application program for carrying out a game in response to an operation performed through the communication terminal when a participation application for a program is received from a communication terminal via the communication unit, making a decision on whether to allow a user of the communication terminal to participate in the program depending on the outcome of the game the information of which is received from the communication terminal via the communication unit, and transmitting from the communication unit to the communication terminal address information showing an address of information required for participating in the program when participation is allowed.

### Brief Description of Drawings

Fig.1 is a diagram showing the configuration of a communication system of the first embodiment.
Fig.2 is a diagram showing the configuration of participation application server PS of the same embodiment.
Fig.3 is a diagram showing memory contents of broadcasting time table TBL1 of the same embodiment.
Fig.4 is a diagram showing memory-contents of applicant database DB 15-k of the same embodiment.
Fig.5 is a diagram showing one example of memory contents of transmitted-information database DB 16-k of the same embodiment.
Fig.6 is a diagram showing transmission and reception of data performed by the communication system of the same embodiment.
Fig.7 is a diagram showing one example of an image displayed on the liquid crystal displaying unit of mobile unit MS in the same embodiment.
Fig.8 is a flowchart showing the process performed by system controlling unit 11 of participation application server PS of the same embodiment.
Fig.9 is a diagram showing one example of an image displayed on the liquid crystal displaying unit of mobile unit MS of the same embodiment.
Fig.10 is a flowchart showing the process performed by system controlling unit 11 of participation application server PS of the same embodiment.
Fig.11 is a diagram showing one example of the shifting of images displayed on the liquid crystal displaying unit of mobile unit MS of the same embodiment.
Fig.12 is a diagram showing one example of an image of a quiz program displayed on the liquid crystal displaying unit of mobile unit MS, which is the image equivalent of the program participation page in the same embodiment.
Fig.13 is a diagram showing transmission and reception of data performed by the communication system of the second embodiment.
Fig.14 is a flowchart showing the process performed by system controlling unit 11 of participation application server PS of the same embodiment.
Fig.15 is a diagram showing memory contents of applicant database DB 15-k of the third embodiment.
Fig.16 is a diagram showing transmission and reception of data performed by the communication system of the same embodiment.
Fig.17 is a flowchart showing the process performed by system controlling unit 11 of participation application server PS of the same embodiment.

### Embodiments of the invention

Hereafter, the embodiments of the present invention will be explained by referring to figures. The present embodiments will be achieved by applying the present invention to a mobile communication network which is connected to the Internet.

### [1] First Embodiment

### [1.1] First Embodiment Configuration

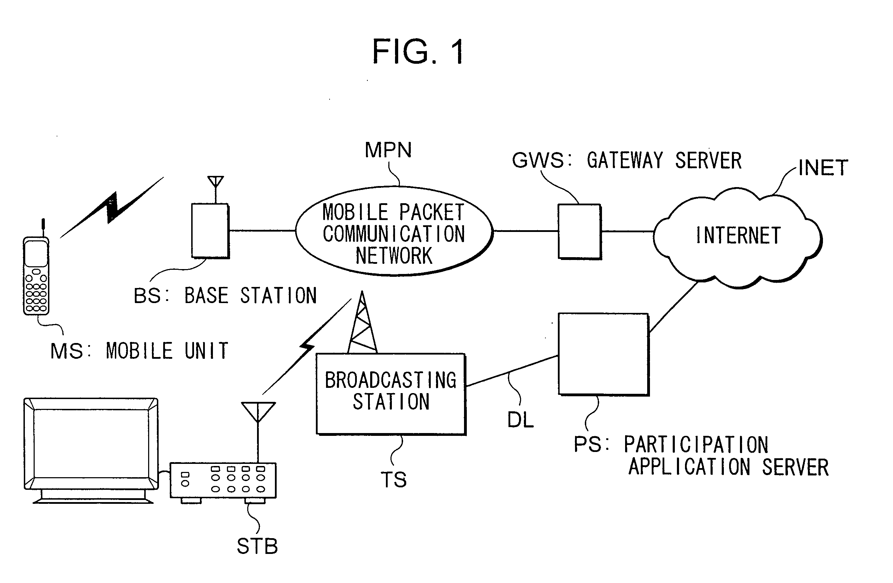

Fig.1 is a diagram showing the configuration of the communication system of the present embodiment. As shown in this figure, the communication system of the present embodiment consists of broadcasting station TS, participation application server PS, a plurality of mobile units MS, a plurality of set-top boxes STB, mobile packet communication network MPN, and Internet INET. In Fig.1, only one specific mobile unit and set-top box are shown out of a plurality of mobile units MS and set-top boxes STB which the communication system consists of in order to avoid complicating the figure.

The object of the communication system of the present embodiment is to achieve a program participation service by which users watching a program broadcast by broadcasting station TS as a quiz program are able to participate. Following is an explanation of how each unit of the communication system of the present embodiment achieves this function.

First, television station TS records several kinds of programs such as quiz programs (hereafter, merely referred to as "programs"), and broadcasts the program data corresponding to the recorded programs by using broadcasting media such as ground based digital broadcasting. Broadcasting station TS is equipped with a recording facility for recording programs; a broadcasting facility for transmitting ground waves modulated from the carrier by the program data; and a computer system for keeping track of broadcasting times of programs and editing broadcasting contents. The computer system is connected to participation application server PS via line DL which is exclusive. Through the function of the computer system, broadcasting station TS performs data communication with participation application server PS. The "program" in "Claims" refers to an "event" broadcast by broadcasting station TS and provided to users through images obtained by interpreting the program data.

Set-top box STB receives broadcast waves transmitted from broadcasting station TS and demodulates them. Set-top box STB converts the demodulated broadcast waves by D/A conversion (Digital/Analog conversion), and provides them to display units such as television sets or liquid crystal displays. As a result, images corresponding to the program data contained in these broadcast waves are displayed on displaying units. By using the function of set-top box STB, the user can watch the contents of several programs broadcast by broadcasting station TS. Set-top box STB can be fitted into a television set, or it can be operated even when placed separately from a television set. What matters the most is that the user can watch these programs by receiving broadcast waves transmitted by broadcasting station TS and displaying images corresponding to the contents of programs.

Mobile unit MS is a portable communication terminal such as a cellular telephone or a PHS owned by members of the audience who watch the program broadcast by broadcasting station TS (in other words, the users of set-top box STB), which receives a packet communication service of mobile packet communication network MPN along with a calling service of a mobile communication network (which is not shown). Mobile unit MS is equipped with a voice input/output unit such as a microphone or a speaker for a user to perform verbal communication; a transmission/reception unit for performing radio communication with base stations of the mobile communication network; a liquid crystal displaying unit composed of a liquid crystal panel and so forth; a command inputting unit such as PB (push button) or cursor buttons; and a control unit for controlling each of these units.

Also, mobile unit MS is equipped with memory (figure is omitted). In this memory, mobile unit IDs for specifying each mobile unit MS and the WWW (World Wide Web) browser are stored. The WWW browser stored in this memory is composed of the following two functions.

### a. Browsing Function

The browsing function is for obtaining resources stored in a communication device connected to Internet INET (for instance, the data in HTML (Hyper Text Makeup Language) style and providing user interfaces corresponding to the obtained resources.

### b. Mailer Function

The mailer function is for producing electronic mails, and transmitting and receiving them.

A user of mobile unit MS might wish to participate in a program broadcast by broadcasting station TS while he/she is watching the program by using set-top box STB. In this case, the user applies for participating in this program to participation application server PS by using the browsing function of WWW browser stored in the memory of mobile unit MS.

Also, installed in the memory are, the storage domain for storing applications downloaded by the controlling unit of mobile unit MS (figure is omitted) which uses the browsing function of WWW browser to download (hereafter, referred to as "downloaded application storage domain"), and the storage domain for storing electronic mails received from mobile packet communication network MPN by operating the mailer function.

Within the mobile unit MS, there is the environment for executing each application downloaded via mobile packet communication network MPN (such as JRE (java runtime environment)), but details of the execution environment are omitted since the execution environment of applications installed in mobile unit MS is a well-known art.

Mobile packet communication network MPN is the communication network for providing a packet communication service to mobile unit MS, and is composed of gateway server GWS, a plurality of base stations BS, and a packet subscriber processing unit which is not shown.

Gateway server GWS is the computer system installed in the mobile packet gateway relaying switch station for connecting Internet INET and mobile packet communication network MPN. Gateway server GWS converts the protocol of the received data into the protocol of the addressed network, and forwards them.

Also, gateway server GWS is equipped with the mail server function. As it receives electronic mail addressed to mobile unit MS served in mobile packet communication network MPN, it transmits the received mail to the addressed mobile unit MS. On the other hand, when it receives electronic mail addressed to the communication device connected to Internet INET from mobile unit MS served in mobile packet communication network MPN, it forwards the electronic mail to Internet INET.

Participation application server PS is a WWW server connected to Internet INET and determines the users who can participate in a program after receiving applications for participating in the program from users of mobile unit MS (in other words, the audience). Then, participation application server PS, as a result of determining, sorts each piece of information transmitted from mobile units MS of the users who won the right to participate and provides this information to broadcasting station TS.

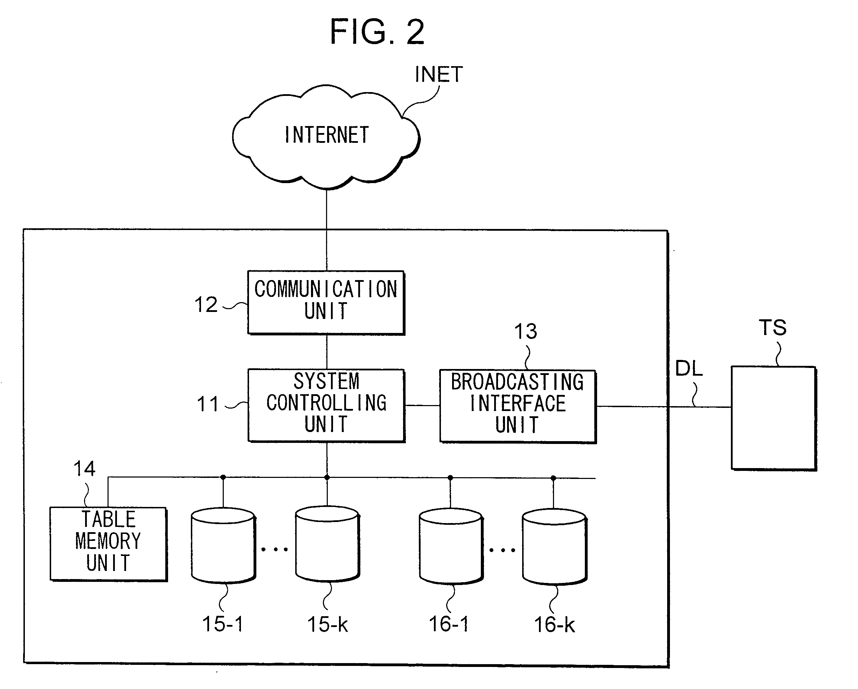

The configuration of partrcipation application server PS with these functions is shown in Fig.2. As shown in this figure, participation application server PS of the present embodiment consists of system controlling unit 11, a communication unit 12, a broadcasting interface unit 13, a table memory unit 14, a plurality of applicant databases 15-k (k=1,2,...,n) (hereafter, "database" will be abbreviated as "DB") and a plurality of transmitted information DB 16-k (k=1,2,...,n). In Fig.2, only a few specific applicant DB and transmitted information DB from a plurality of applicant DB 15-k and transmitted information DB 16-k are shown in order to avoid complicating the figure.

Communication unit 12 relays data between Internet INET and system controlling unit 11. Specifically, as data are outputted from system controlling unit 11, communication unit 12 transmits the data to Internet INET, and sends the data received from Internet INET to system controlling unit 11.

Broadcasting station interface unit 13 is connected to the above mentioned computer system of broadcasting station TS via exclusive line DL, and relays data between broadcasting station TS and system controlling unit 11. Specifically, broadcasting station interface unit 13 transmits the data outputted from system controlling unit 11 to broadcasting station TS via exclusive line DL. Also, it receives the data transmitted from broadcasting station TS via exclusive line DL and-sends to controlling unit 11.

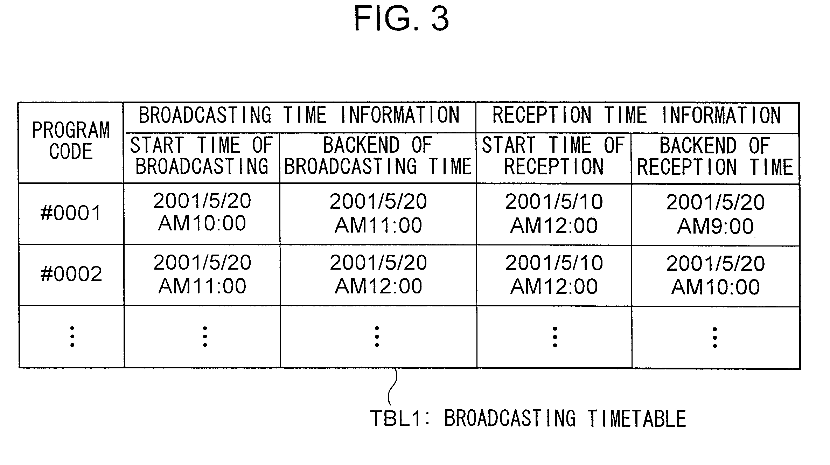

In table memory unit 14, the broadcasting times of each program and broadcasting timetable TBL 1 for keeping track of the times for receiving participation application are stored. Fig.3 is a diagram showing the memory contents of broadcasting timetable TBL 1 of the present embodiment. As shown in this figure, in broadcasting timetable TBL 1 of the present embodiment, broadcasting time information showing the broadcasting time of the program and the time in the information showing the time for receiving application for participating in the program according to the program code corresponding to each program are stored. The program code stands for identification information for specifying each program broadcast by broadcasting station TS.

System controlling unit 11 determines whether to receive the application for participating in the program on the basis of the time in the information stored in broadcasting timetable TBL 1. Also, system controlling unit 11 keeps track of information transmitted from mobile unit MS of users who won the right to participate in the program on the basis of the broadcasting time information.

Storing methods of each piece of information in broadcasting timetable TBL 1 can be various. For instance, data can be transmitted from the computer system of broadcasting station TS connected via broadcasting station interface unit 13. Also, employees of broadcasting station TS can produce a list of the broadcasting plan of each program and store the information in the participation application server on the basis of the list of broadcasting plan.

Applicant DB 15-k is the DB in which information for keeping track of users who applied for participating in each program is stored. Applicant DB 15-k is the DB to be produced by system controlling unit 11 at the time when reception begins which is equivalent to the time in the information in broadcasting timetable TBL 1, and corresponds to each program broadcast by broadcasting station TS.

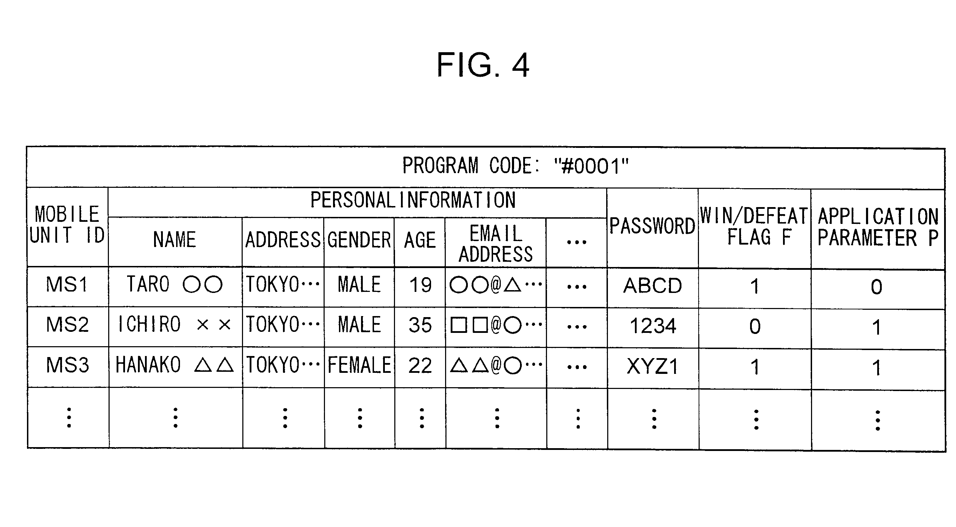

Fig.4 is a diagram showing the memory contents of applicant DB 15-k of the present embodiment. In the figure, applicant DB 15-k corresponding to the program code "#0001" is shown. As shown in the figure, each program code corresponding to the DB 15-k is stored in applicant DB 15-k of the present embodiment. Also, it is composed of the field for storing the mobile unit ID of mobile unit MS of a user who applied for participating in the program corresponding to the program code; the field for storing personal information on the user (such as name, age, gender, address, email address and telephone number); the field for storing win/defeat flag F; the field for storing application parameter P; and the field for storing the password.

The password is determined by the user who applies for participating in the program when the application is received. Also, win/defeat flag F shows whether the user won the right to participate in the program (in other words, the program corresponding to applicant DB 15-k). When flag F shows "0", the user has won the right to participate in the program. When flag F shows "1", the user has not been able to win the right to participate in the program.

Also, application parameter P shows the status of the user. When parameter P shows "0", the user has not applied for participating. And, when parameter P shows "1", the application for participating by the user can not be accepted. When the parameter shows "2", the reception time of the application has ended (in other words, the backend of reception time corresponding to the time in the information has passed).

Application parameter P is switched to "1" as the user of mobile unit MS applies for participating in the program. Then the parameter is switched to "2" as winning or defeat is determined. As a result, it is possible to determine whether the same user has applied for participating a second time, thereby, preventing multiple applications by the same user. Then as the backend of reception time corresponding to the time in the information stored in broadcasting time table TBL 1 passes, parameter P corresponding to each user is switched to "2", and no application for participating in this program is received thenceforth.

Transmitted DB 16-k is the DB set up for each program code (in other words, each program) as in the case of applicant DB 15-k, and is the DB for sorting information sent from the users who won the right to participate in the program. Changes are made in the memory contents of transmitted information DB 16-k according to the contents of each program. For instance, if the content of the program is simply a questionnaire, DB 16-k needs only to be equipped with information on the contents of each questionnaire and the counter for counting the number of responses to this questionnaire.

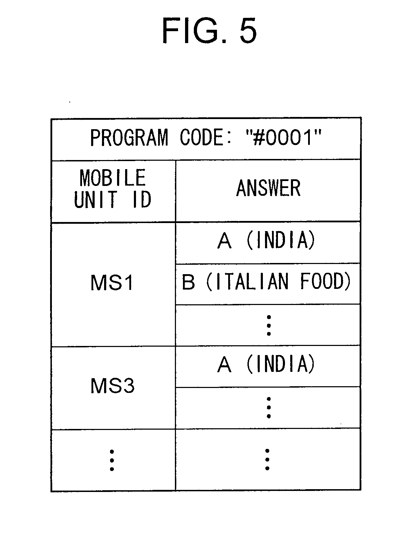

Shown in Fig.5 are the memory contents of transmitted information DB 16-k when the program corresponding to transmitted information DB 16-k is a quiz program. As shown in the figure, the program code of the program is stored in DB 16-k. Also, there are fields corresponding to the mobile unit IDs of mobile units MS, of the users who won the right to participate in the program for, storing the answers for the quiz.

System controlling unit 11 is composed of CPU, ROM, RAM, a hard disc and so forth, and controls each unit of participation application server PS. Several kinds of controlling programs and controlling information are stored in ROM. CPU controls each unit of participation application server PS by executing the programs stored in ROM and the hard disc. RAM is used as the work area.

In the hard disc, HTML data corresponding to several pages stored in participation application server as resources are stored. Pages corresponding to the HTML data stored in the hard disc include the ones described below and can be many more. Each page has attached to it a URL (Uniform resource locator).
i) Participation Application Page
   Participation Application Pages are pages filled out by the user of mobile unit MS when applying for participating in a program broadcast by broadcasting station TS. The pages differ according to each program code (in other words, each program). According to the page in which participation was applied, the program the user wishes to participate in can be specified.
ii) Program Participation Page
   Program Participation Pages are pages for users who won the right to participate in a program to input information (such as answers to a quiz). Also with regard to program participation pages, each page has a different set up according to the program.

Also, among the resources stored in the hard disc, besides the HTML data corresponding to these pages, is the application page which is transmitted to mobile unit MS of the user who applied for participation. (hereafter, referred to as "mobile unit application"). As the mobile unit application is executed at mobile unit MS, several events occur. Although contents of events which occur in mobile unit MS can be varied, the present embodiment contains a slot machine which provides a concrete explanation. Any program language (for instance, Java) can be used for producing the mobile unit application.

Two types of mobile applications are prepared for each program, and each mobile unit application contains a different URL.
1. Win Application
   This is the application which is programmed for a "win" result to occur. In the present embodiment, the mobile unit application is a slot machine, and when the application is executed by mobile unit MS, it is programmed for a "win" result, (for instance, "777") to occur.
2. Defeat Application
   This is the application which is programmed for a "defeat" to occur.

Also, if the user drops mobile unit MS in which the "win application" was downloaded, there is a danger that the finder executes the "win application" and participates in the program fraudulently. Hence, both "win" and "defeat" applications of the mobile unit are provided with the function for performing user authentication.

For achieving this function, system controlling unit 11 of participation application server PS of the present embodiment reads out the password stored in applicant DB 15-k (in other words, the password set up by the user of mobile unit MS) when it transmits the mobile unit application to mobile unit MS. Then, the password is retained as data in the mobile unit application which is transmitted to mobile unit MS.

On the other hand, as the mobile unit application is executed by the controlling unit, which is not shown, the mobile unit MS to which the mobile unit application was transmitted displays an image for prompting the user to input his/her password. Next, the password inputted by the user in response to the image prompt, is compared to the password data retained in the mobile unit application, and the application is further processed if both passwords accord.

Also, in the hard disc, some applications which the CPU of system controlling unit 11 executes are stored besides each of the above mentioned resources. With regard to the applications stored in the hard disc, there are three other applications stored besides the application for sending resources retained within the server, which can be utilized, when participation application server PS receives a GET request (hereafter, merely referred to as "GET request") of HTTP (Hyper Text Transfer Protocol).

### a. Mailer

This is the application for transmitting and receiving emails. Participation application server achieves the function of the mail client by executing this application. As the user of mobile unit MS applies for participating in the program, system controlling unit 11 transmits by executing the mailer, an email message to mobile unit MS for authentication.

### b. Participation Receiving Application

The participation receiving application gives the right to participate in the program to a specified number of users out of the many users who applied for participating in the program broadcast by broadcasting station TS in the above mentioned participation application page. Plus, it sends the above mentioned mobile unit application back to mobile unit MS.

As participating in the program is applied in the participation application page, system controlling unit 11 stores personal information transmitted from mobile unit MS in applicant DB 15-k of the program for which participation was applied by executing the participation receiving application. Then, system controlling unit 11 determines whether to give the user the right to participate and determines the value of win/defeat flag F to be stored in applicant DB 15-k. Specifically, as it determines to give the right to participate to the user, the win/defeat value for the user will be "0". On the other hand, when it determines not to give a user the right to participate, the value of the win/defeat flag will be "1".

Then, system controlling unit 11 transmits the "win application" as the mobile unit application to mobile unit MS in which flag F is "0". To mobile unit MS in which flag F is "1", the "defeat application" is transmitted.

Controlling unit 11 can determine, in any manner, during this process whether to give the right to participate. One example of this method is described below:
i) Narrowing method a
   By this method, it is determined at random whether to accept participation application.
ii) Narrowing method b
   By this method, users to be given the right to participate in the program are determined in response to the request from the program producer of broadcasting station TS. First, the requirement for participating in the program (such as users living in Kanagawa Prefecture, or women in their 30's) is determined beforehand by the program producer of broadcasting station TS, and only the users who match this requirement are chosen. This narrowing method makes it possible to allow only the users who fall in the category required by the program producer to participate in the program.

### c. Information Sorting Application

Information sorting application is the program for storing information inputted by users who won the right to participate in the program, and providing the information to broadcasting station TS via exclusive line DL. Broadcasting station TS changes contents of the broadcast program according to information transmitted from participation application server PS during this process. Changing the contents of the broadcast program can be carried out using various methods. One method is to install a monitor in the program broadcasting studio and displaying on the monitor the outcomes of the sorted information which the host of the program can see and change hosting contents accordingly.

### [1.2] Operations of the First Embodiment

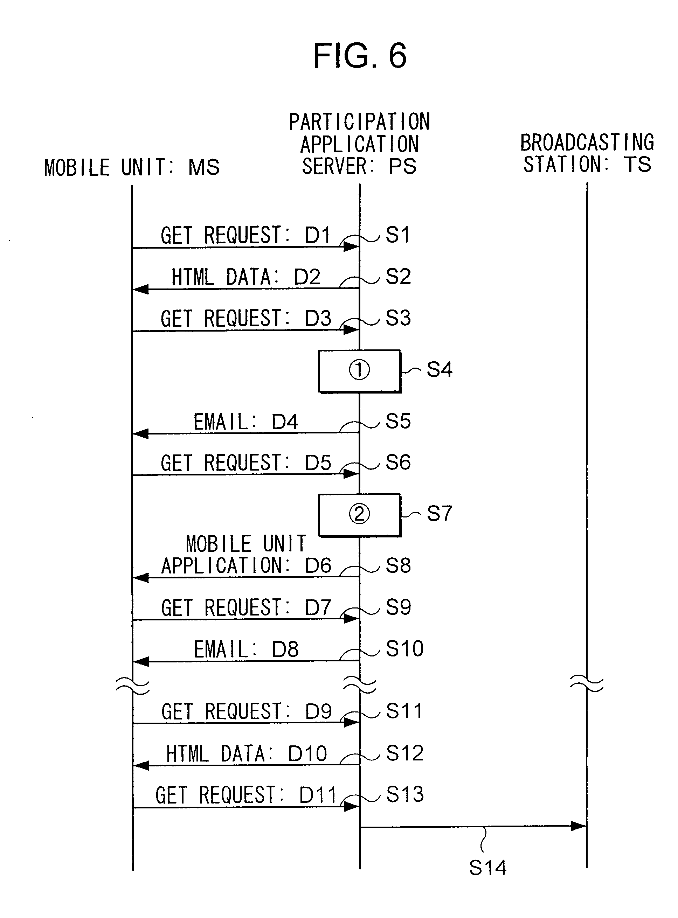

Next, operations of users (in other words, the audience) of mobile unit MS for participating in the program broadcast by broadcasting station TS in the communication system of the present embodiment according to the above mentioned configuration will be explained by referring to Fig.6. In the explanation below, the mobile unit ID of mobile unit MS of the user who applies for participation is "MS1", and memory contents of broadcasting timetable TBL1 will be the same as in Fig.3 to make the explanation concise.

First, when a user wishes to participate in a program broadcast by broadcasting station TS, he/she performs an inputting operation for using the browsing function of WWW browser by the command inputting unit (figure is omitted) of mobile unit MS. Then the controlling unit of mobile unit MS (figure is omitted) reads out WWW browser from the above mentioned memory and executes packet registration to the above mentioned packet subscriber processing unit of mobile packet communication network MPN. Packet registration is a registration process for mobile unit MS to perform packet communication via mobile packet communication network MPN.

Then, as the user performs, for instance, the inputting operation for specifying the URL of the participation application page for the program corresponding to "#0001", the controlling unit of mobile unit MS transmits GET request D1 containing the inputted URL to mobile packet communication network MPN (Step S1). Thus, GET request D1 transmitted by mobile unit MS is received by gateway server GWS of mobile packet communication network MPN, and forwarded to Internet INET.

As GET request D1 is received by communication unit 12 of participation application server PS, system controlling unit 11 extracts the URL contained in GET request D1 and sends the resources corresponding to the URL (in other words, HTML data D2 corresponding to the participation application page) to Internet INET via communication unit 12 (Step S2).

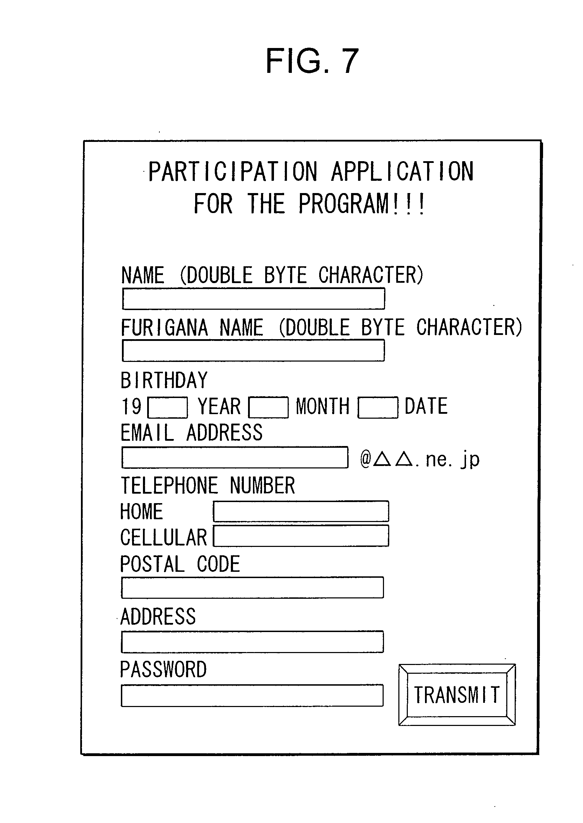

Thus, as HTML data D2 transmitted from participation application server PS is received, the controlling unit of mobile unit MS displays the image corresponding to HTML data D2 on the liquid crystal displaying unit (figure is omitted). Fig.7 is an example of an image displayed on the liquid crystal displaying unit of mobile unit MS during this process. As shown in this figure, the section for the user of mobile unit MS to input personal information (in other words, name, address, age, and email address); the section to input the password; and the "transmit" button, are displayed in the liquid crystal displaying unit of mobile unit MS during this process. In the "transmit" button, the URL which contains the program code "#0001", of the program the user applied for participation, is attached as the parameter of CGI (common gateway interface), and system controlling unit 11 of participation application server PS can specify the program on the basis of the CGI parameter the URL contains.

At this stage, the user of mobile unit MS inputs personal information such as the password and the age, by operating the command inputting unit of mobile unit MS and hits the "transmit" button. Then, the controlling unit of mobile unit MS transmits GET request D3 to which the password, and personal information inputted by the user are attached (Step S3). The controlling unit of mobile unit MS adds mobile unit ID "MS1" to GET request D3 and transmits the ID during this process.

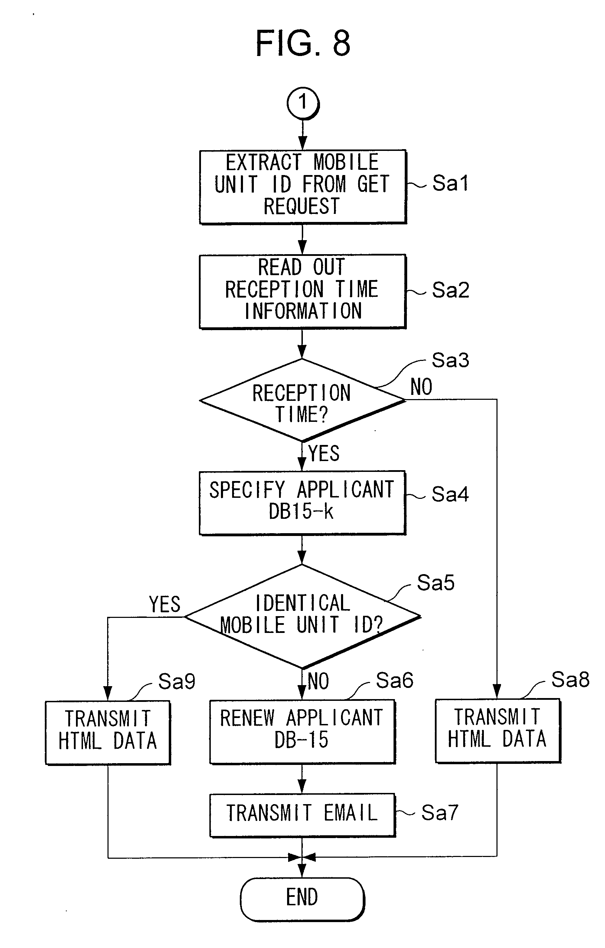

Thus, as GET request D3 transmitted from mobile unit MS is received, the participation receiving application is executed in accordance with the URL contained in GET request D3 by system controlling unit 11 of participation application server PS, and the process shown in Fig. 8 is executed.

During this process, system controlling unit 11 first extracts mobile unit ID "MS1", the password and personal information attached to GET request D3, (Fig.8 Step Sa1) and stores in RAM. Next, system controlling unit 11 specifies program code "#0001" on the basis of the URL contained in GET request D3, and reads out the receiving time information regarding the program corresponding to program code "#0001" from broadcasting timetable TBL1 (Fig.8 Step Sa2).

Then, system controlling unit 11 determines whether it is past the backend of reception time "9:00 AM of May 20th, 2001" which corresponds to the receiving time information (Fig.8 step Sa3). Then, as a result, if the backend of reception time "9:00 AM of May 20th, 2001" is determined to be already past ("No"), system controlling unit 11 produces HTML data with a letter string such as "Your application can not be received since it is already past the backend of reception time", and transmits the message to Internet INET (Fig.8 Step Sa8) and concludes the process. As a result, the image corresponding to the HTML data is displayed in the liquid crystal displaying unit of mobile unit MS which received the HTML data.

On the other hand, if it is determined that the backend of reception time is not past ("Yes") in step Sa3, system controlling unit 11 of participation application server PS specifies applicant DB 15-k corresponding to program code "#0001" according to the URL contained in GET request D1 (Fig.8 Step Sa4). Then, system controlling unit 11 determines whether the same mobile unit ID as mobile unit ID "MS1" stored in RAM exists in the mobile unit IDs stored in applicant DB 15-k. (Fig.8 Step Sa5).

If it is determined that the mobile unit ID "MS1" stored in RAM exists in the mobile unit IDs stored in applicant DB 15-k, it is established that the user of mobile unit MS had already applied for participating in this program once. Then, if it is determined to be "Yes" in Step Sa5, system controlling unit 11 produces HTML data describing a letter string such as "Repeat applications can not be accepted" and transmits the message to Internet INET (Fig.8 Step Sa9) and concludes the process. As a result, in the liquid displaying unit of mobile unit MS, the image corresponding to the HTML data is displayed.

On the other hand, if it is determined to be "No" in step Sa5, system controlling unit 11 renews applicant DB 15-k according to mobile unit ID "MS1" stored in RAM, personal information and so forth (Fig.8 Step Sa6). Specifically, system controlling unit 11 stores personal information and the password which correspond to mobile unit ID "MS1" stored in the RAM in applicant DB 15-k along with "0" as application parameter P in the field corresponding to the mobile unit ID. As a result, in applicant DB 15-k, each piece of information shown in Fig.4 except for the win/defeat flag F is stored.

Then, as the renewal of applicant DB 15-k is completed , system controlling unit 11 reads out the mailer stored in the hard disc. Then system controlling unit 11 reads out the email address "○○@ΔΔ.ne.jp" which corresponds to mobile unit ID "MS1" stored in applicant DB 15-k, and produces email D4 and transmits to the email address "○○@Δ Δ.ne.jp" (Step S5 and Fig.8 step Sa7). During this process, system controlling unit 11 attaches the URL for downloading the mobile unit application corresponding to the program which the user applied for participating (in other words, the program corresponding to the program code "#0001") to email D4.

Thus, participation application server PS of the present embodiment transmits email D4 to which the URL for downloading the mobile unit application (hereafter, referred to as "download URL") is attached to the email address stored in applicant DB 15-k. Hence, a member of the audience can not obtain the download URL unless he/she inputs in the participation application page the email address of mobile unit MS he/she owns. By this process, fraudulent, or unauthorized participation application can be eliminated.

On the other hand, email D4 transmitted from participation application server PS is received by gateway server GWS of mobile packet communication network MPN, and transmitted to mobile unit MS. Then, the controlling unit of mobile unit MS stores the received email D4 in the above mentioned mail storage domain of the memory by using the mailer function of WWW browser.

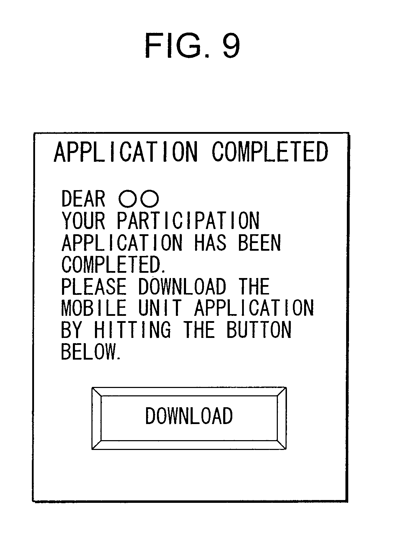

At this stage, as the user carries out an inputting operation by the command inputting unit of mobile unit MS for displaying the received email, an image as shown in Fig.9 is displayed in the liquid crystal displaying unit of mobile unit MS. As shown in the figure, for instance, the "download" button is displayed along with a letter string such as "Dear ○○, your participation application has been completed" in the liquid crystal displaying unit of mobile unit MS during this process.

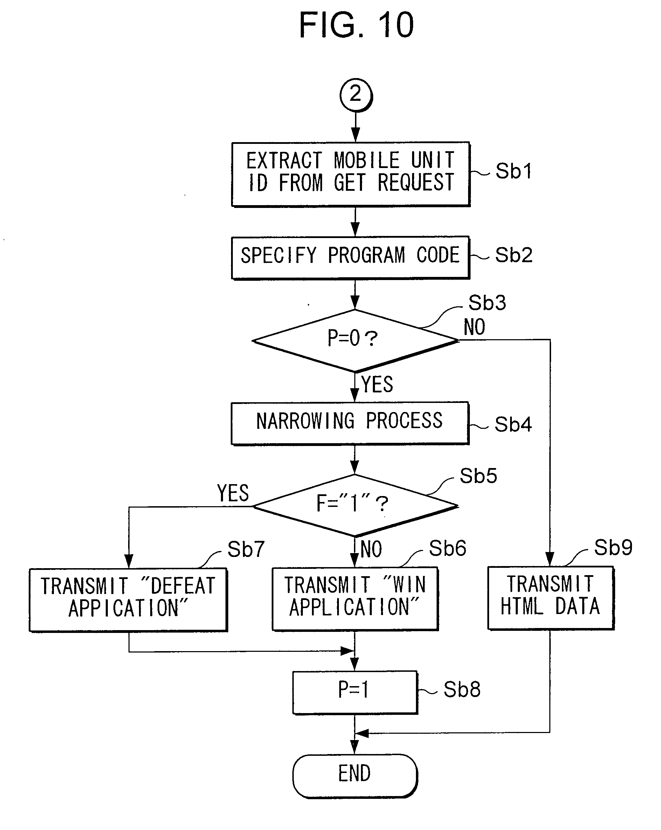

At this stage, as the user hits the "download" button by the command inputting unit of mobile unit MS, the controlling unit of mobile unit MS transmits GET request D5 containing the URL corresponding to the button, (in other words, the downloaded URL), after attaching mobile unit ID "MS1" of mobile unit MS to mobile packet communication network MPN (Step S6). Thus, as system controlling unit 11 of participation application server PS receives GET request D5 transmitted from mobile unit MS, it executes the process shown in Fig.10 according to the above mentioned participation application program (Step S7).

During this process, the system controlling unit first extracts mobile unit ID "MS1" attached to GET request D5 (Fig.10 Step Sb1) and stores in RAM. Then, system controlling unit 11 extracts the download URL contained in GET request D5 and specifies the program code "#0001" based upon the URL. Then, system controlling unit 11 reads out application parameter P corresponding to mobile unit ID "MS1" stored in RAM from applicant DB 15-k corresponding to program code "#0001" and determines whether the value of the application parameter P is "0" (Fig.10 Step Sb 3).

As a result, when it is determined that the application parameter is not "0" (in other words, when application parameter P is "1" or "2"), it is established that mobile unit MS of the user had already downloaded the application once according to the URL described in email D4. In this case, however, if downloading is allowed again, the user will be able to apply for participating in the program a plurality of times.

Therefore, when it is determined to be "No" in step Sb3, system controlling unit 11 produces HTML data in which a letter string stating, for instance, "The application has been downloaded once already", and transmits the HTML data to Internet INET (Fig.10 step Sb9) and concludes the process. As a result, in the liquid crystal display unit of mobile unit MS, an image corresponding to the HTML data is displayed.

On the other hand, when it is determined that the application parameter is "Yes" in step Sb3, system controlling unit 11 carries out the narrowing process (Fig.10 step Sb4). System controlling unit 11 carries out the narrowing process as follows:
Step 1: First, system controlling unit 11 determines whether to give the right to participate in this program to the user of the mobile unit MS. System controlling unit 11 determines whether to give the right to participate to the user by methods such as the above mentioned narrowing methods a and b.
Step 2: System controlling unit 11 stores win/defeat flag F in the field corresponding to mobile unit ID "MS1" stored in RAM of applicant DB 15-k corresponding to program code "#0001." Win/defeat flag F to be stored in applicant DB 15-k during this stage will be "0" if the right to participate is given to the user, and flag F will be "1" if the right to participate is not given.

As a result of this narrowing process, system controlling unit 11 determines whether the stored win/defeat flag F is "1" after win/defeat flag F was stored in applicant DB 15-k (Fig.10 Step Sb5). The mobile unit application D6 to be transmitted to mobile unit MS, changes according to the result of the determination process.

Specifically, when it is determined to be "No" in Step Sb5, system controlling unit 11 transmits the "win application" corresponding to program code "#0001" (Fig.10 step Sb6). When it is determined to be "Yes", it transmits the "defeat application" corresponding to program code "#0001" (Fig10, Step Sb7). As a result, the "win application" corresponding to program code "#0001" is transmitted to mobile unit MS of the user who won the right to participate as mobile unit application D6, and the "defeat application" corresponding to program code "#0001" to mobile unit MS of the user who did not win the right to participate (Fig.6 Step S8). As described above, the password set up by the user of mobile unit MS will be attached as data to the mobile unit application to be transmitted to mobile unit MS.

As the transmission of mobile unit application D6 concludes in this manner, system controlling unit 11 switches application parameter P corresponding to mobile unit ID "MS1" in applicant DB 15-k to "1" and concludes the process (Step Sb8).

On the other hand, as mobile unit application D6 transmitted from participation application server PS is received, the controlling unit of mobile unit MS stores mobile unit application D6 in the downloaded application storage domain. At this stage, as the user of mobile unit MS carries out the inputting operation using the command inputting unit of mobile unit MS to execute mobile unit application D6, the controlling unit of mobile unit MS executes mobile unit application D6 stored in the downloaded application storage domain. As a result, an image for inputting the password is displayed in the liquid crystal displaying unit of mobile unit MS.

Next, as the user inputs the password set up by himself/herself, the controlling unit of mobile unit MS determines whether the password retained by mobile unit application D6 and the password inputted by the user accord. Then, as a result, if the passwords do not accord, the controlling unit of mobile unit MS displays a letter string such as "The password is wrong" on the liquid crystal displaying unit.

On the other hand, if the passwords accord, the controlling unit of mobile unit MS causes an event to take place in accordance with mobile unit application D6.

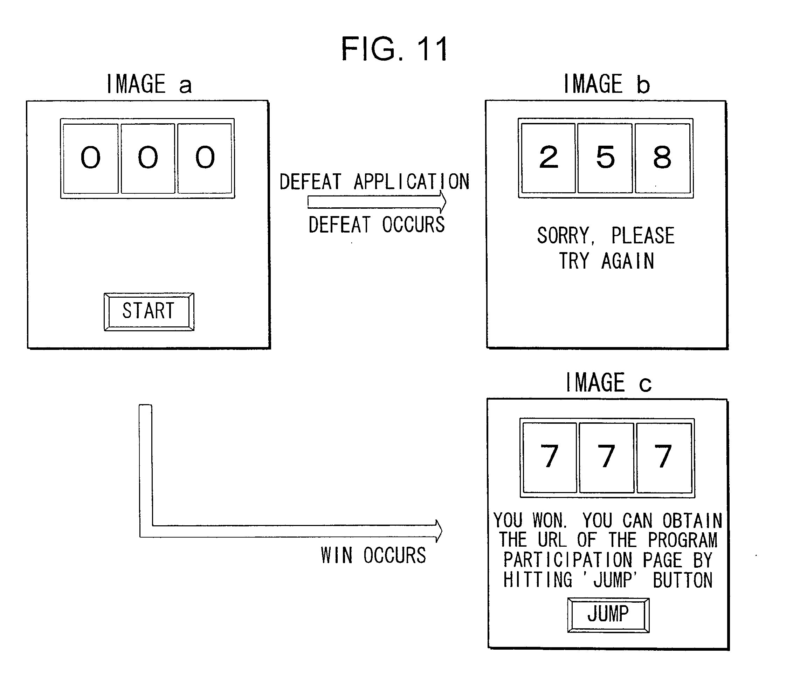

Contents of the event which occurs in mobile unit MS at this stage will be described with a concrete explanation by referring to Fig. 11. First, as the mobile unit application is executed, the "Start" button is displayed with slots in the liquid crystal displaying unit of mobile unit MS as shown in (a). As the user hits the "Start" button by using the command inputting unit of mobile unit MS, the slots displayed in the liquid crystal displaying unit of mobile unit MS begin to revolve. At this stage, as the user carries out the specified inputting operation using the command inputting unit of mobile unit MS, the slots stop revolving.

If mobile unit application D6 is a "defeat application", the image displayed in the liquid displaying unit of mobile unit MS shifts as shown in (b). In other words, for instance, with such an image as "258", a letter string such as "Sorry, please try again" will be displayed, and the process comes to an end.

On the other hand, when mobile unit application D6 is a "win application", the image displayed in the liquid crystal displaying unit of mobile unit MS shifts as shown in (c). In other words, the "Jump" button will be displayed with the image "777" in the liquid displaying unit of mobile unit MS, and a letter string such as "You won. You can obtain the URL of the program participation page by hitting 'Jump' button" will be displayed.

At this stage, the "Jump" button corresponds to the URL which contains program code "#0001" as CGI parameter. Hence, as the user of mobile unit MS hits "Jump" button using the command inputting unit of mobile unit MS, the controlling unit of mobile unit MS transmits GET request D7 containing the URL corresponding to the "Jump" button to mobile packet communication network MPN (Step S9). At this stage, the controlling unit of mobile unit MS transmits GET request D7 by attaching mobile unit ID "MS 1" of the mobile unit.

Thus, as GET request D7 transmitted from mobile unit MS is received, system controlling unit 11 of participation application server PS extracts the URL contained in GET request D7 and specifies program code "#0001" on the basis of the URL. Then, system controlling.unit 11 reads out email address "○○@ ΔΔ.ne.jp" corresponding to mobile unit ID "MS1" attached to GET request D7 in applicant DB 15-k corresponding to program code "#0001."

Then system controlling unit 11 produces email D8 addressed to "○○@ΔΔ.ne.jp" and transmits it to Internet INET after attaching the URL corresponding to the program participation page to email D8 (Step S10). As a result, email D8 transmitted by the participation application server PS is received by gateway server GWS, transmitted to mobile unit MS and stored in the mail storage domain of the above mentioned memory by the controlling unit of mobile unit MS. The user of mobile unit MS needs to wait until the start time of the program he/she applied for participating at this stage.

On the other hand, system controlling unit 11 of participation application server PS switches each application parameter stored in applicant DB 15-k corresponding to program code "#0001" of the program to "2" at the backend of reception time "9:00 AM of May 20th, 2001" which corresponds to the receiving time information of the program, and ends the reception of the participation application. Then system controlling unit 11 transmits all personal information stored in applicant DB 15-k to broadcasting station TS via broadcasting station interface unit 13.

Thus, the program producer of broadcasting station TS can grasp the audience distribution of the program he/she produced on the basis of personal information transmitted from participation application server PS. Also, providing personal information is possible in response to a request from the sponsors of the program.

On the other hand, as the user who won the right to participate performs the inputting operation to display email D8 using the command inputting unit of mobile unit MS, the controlling unit of mobile unit MS reads out email D8 stored in the mail storage domain and displays the email on the liquid crystal displaying unit.

As a result, for instance, the "Jump" button along with a letter string such as "You can go to the participation screen by hitting the Jump button" will be displayed on the liquid crystal displaying unit of mobile unit MS. The URL corresponding to HTML data of the above mentioned program participation page is attached to the "Jump" button.

At this stage, as the user hits the "Jump" button by using the command inputting unit of mobile unit MS, the controlling unit of mobile unit MS transmits GET request D9 containing the URL corresponding to the participation application page (Step S11). Thus, as communication unit 12 of participation application server PS receives GET request D9 transmitted from mobile unit MS, system controlling unit 11 sends HTML data D10 corresponding to participation application page back in accordance with the URL contained in GET request D9 (Step S12).

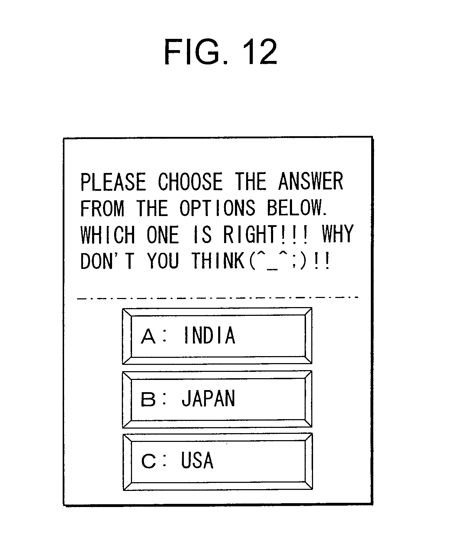

As HTML data D8 is received, the controlling unit of mobile unit MS displays the image corresponding to HTML data D10 on the liquid crystal displaying unit. In Fig.12, an example of the image displayed on the liquid crystal displaying unit of mobile unit MS as the image corresponding to the program participation page when the program the user applied for participating is a quiz program. As shown in this figure, on the liquid crystal displaying unit of mobile unit MS, the button for choosing each answer for questions of the quiz program along with a letter string such as "Please choose the answer from below" is displayed.

At this stage, as the user chooses the answer by using the command inputting unit of mobile unit MS, the controlling unit of mobile unit MS transmits GET request D11 containing the URL corresponding to the answer chosen by the user in the program participation page to mobile packet communication network MPN (Step S13). As GET request D11 is transmitted from mobile unit MS in this manner, system controlling unit 11 of participation application server PS executes the above mentioned information sorting application and renews the information in transmitted information DB 16-k corresponding to the program in accordance with the URL attached to GET request D11. Then each piece of information stored in transmitted information DB 16-k is transmitted to broadcasting station TS (Step S14). As a result, the contents of the program are changed at broadcasting station TS and are broadcast.

Thus, in the communication system of the present embodiment, the participation application server transmits the mobile unit application to the mobile unit of the user who applied for participating in the program, and an event such as a game occurs in the mobile unit. Hence, the user who applied for participating in the program can enjoy the event which occurs in the mobile unit, and the entertaining nature of the participation application for the program can be achieved.

Also, the participation application server of the present embodiment transmits the mobile unit application for causing an event such as slots to not only the mobile units of users who won the right to participate but also to the mobile units of users who did not win the right to participate, and the event occurs in accordance with the application in the mobile units. Hence, making the users who applied for participating in the program feel that they won the right of participating by their game competency, and stimulating user's desire to participate in the program becomes possible.

In the communication system of the present invention, participation application server PS notifies the URL of the program participation page by email D10 (Fig.6 Step S10). However, the method of notifying the URL of the program participation page to the user of mobile unit MS can be different. For instance, when the mobile unit application achieves a win result, the "Jump" button can be displayed along with a letter string such as "You can obtain HTML data corresponding to the program participation page by hitting the 'Jump' button below", and the URL of the program participation page can be attached to the "Jump" button using an anchor. Also, the mobile unit application can retain the same image as the program participation page.

In the present embodiment, participation application server PS and broadcasting station TS are separate, but these two facilities can be united. In other words, participation application server PS can be eliminated by equipping broadcasting station TS with the function of participation application server PS.

In the present embodiment, slots are shown to represent events which occur in mobile unit MS by executing the mobile unit application, although there can be different ways to show events. For instance, by using a horse racing game as the event, the winning horse can be guessed. Also in this case, the selected horse needs to be programmed to win certainly for the "win application", and the horse selected needs to be programmed to certainly lose for the "defeat application." Also, as another example, music in a major key can be played in mobile unit MS to which the "win application" is transmitted, and music in a minor key can be played in mobile unit MS to which the "defeat application" is transmitted.

Also, in this case, a different event can be made to occur for each program.

In the present embodiment, the audience participate in the program broadcast from broadcasting station TS by using mobile unit MS, but they can participate by using a communication terminal besides mobile unit MS (for instance, PC (personal computer)). In this case, the communication terminal needs to be equipped with the above mentioned function of the browser (in other words, the browsing function and the mailer function). Also, in this case, participating in the program by using set-top box STB by equipping it with the above mentioned function of the browser (in other words, the browsing function and the mailer function) is also possible.

In the present embodiment, participation application server PS is connected to Internet INET, but it can also be connected to mobile packet communication network MPN.

### [1.3] Modification Examples

In the above mentioned embodiment, participation application server PS determined whether to give the right to participate to the user who applied for participating before the transmission of the mobile unit application, and according to the result of the determination, the mobile unit application to be transmitted is changed. In other words, the "win application" is transmitted to mobile unit MS of the user who won the right to participate, and the "defeat application" is transmitted to mobile unit MS of the user who did not win the right to participate.

However, the timing for participation application server PS to determine whether to give the right to participate can be after the mobile unit application has been transmitted. In this case, the mobile unit application needs to contain the following function. In other words, the mobile unit application needs to be equipped with the function for checking participation application server the win or the defeat result when it is executed by mobile unit MS.

System controlling unit 11 of participation application server PS narrows the applicants in response to this inquiry, and determines win/defeat flag F for this user and transmits win/defeat flag F to mobile unit MS. Then, the mobile unit application changes the contents of the event to cause it to occur in accordance with win/defeat flag F transmitted from participation application server PS. Specifically, when "0" is transmitted as win/defeat flag F, a "win" result occurs in mobile unit MS. When "1" is transmitted, a "defeat" result occurs in mobile unit MS.

Following is a detailed explanation of the operation in this case. First, the process as in Step S1 to Step S6 in Fig. 6 is executed in the communication system. Thus, as GET request D5 is transmitted from mobile unit MS, system controlling unit 11 of participation application server PS carries out the process as follows in Step S7.
Step i) First, system controlling unit 11 extracts the mobile unit ID attached to GET request D5 and stores it in RAM. Then it extracts the URL contained in the GET request and specifies the program code.
Step ii) Then system controlling unit 11 reads out application parameter P corresponding to the mobile unit ID stored in RAM in applicant DB 15-k corresponding to the program code specified in Step i).
Step iii) System controlling unit 11 determines whether the value of application parameter P is "0", and if parameter P is "0", the mobile unit application is transmitted to mobile unit MS. On the other hand, when parameter P is "1", system controlling unit 11 produces HTML data in which a letter string such as "The application has already been downloaded once" is written, and transmits the message to Internet INET. At this stage, as in the above mentioned embodiment, the mobile unit application system which controlling unit 11 transmits to mobile unit MS contains the password.

As a result of this process, mobile unit application D6 is transmitted from participation application server PS to mobile unit MS without determining whether to give the right to participate to the user who applied for participation (Step S8).

On the other hand, as mobile unit application D6 transmitted from participation application server PS is received, the controlling unit of mobile unit MS stores mobile unit application D6 in the downloaded application storage domain of the above mentioned memory. At this stage, the user of mobile unit MS performs the inputting operation for executing mobile unit application D6 by using the command inputting unit of mobile unit MS. Then the controlling unit of mobile unit MS displays the image for prompting the input of password on the liquid crystal displaying unit in accordance with mobile unit application D6.

At this stage, as the user inputs the password set up by himself/herself, the controlling unit of mobile unit MS determines whether the password mobile unit application D6 retains and the password the user inputted accord. Then, if the result of this determination is negative as in the case when the two passwords do not accord, the controlling unit of mobile unit MS displays a letter string such as "The password is wrong" on the liquid crystal displaying unit.

On the other hand, when these passwords accord, the controlling unit of mobile unit MS reads out the mobile unit ID stored in the above mentioned memory. Then GET request to which the mobile unit ID is attached is transmitted to mobile packet communication network MPN.

Thus, as GET request transmitted from mobile unit MS is received, system controlling unit 11 of participation application server PS extracts the mobile unit ID attached to the GET request and executes the above mentioned narrowing process. In other words, system controlling unit 11 determines whether to give the right to participate to the user of the mobile unit MS in accordance with the above mentioned narrowing method a, b and so forth. Then, in applicant DB 15-k corresponding to program code "#0001", win/defeat flag F is stored in the field corresponding to mobile unit ID "MS1" stored in RAM. At this stage, win/defeat flag F to be stored in applicant DB 15-k will be "0" if the right to participate is given to the user, and win/defeat flag F will be "1" if the right to participate is not given to the user.

As a result of this narrowing process, as win/defeat flag F is stored in applicant DB 15-k, system controlling unit 11 reads out win/defeat flag F and transmits it to Internet INET.

On the other hand, as win/defeat flag F is received, the outcome of the event which occurs in accordance with win/defeat flag F changes in mobile unit MS. In other words, when the received win/defeat flag F is "1" (in other words, when the right to participate is not given), the image displayed on the liquid crystal displaying unit of mobile unit MS shifts from the above mentioned image (a) of Fig.11 to image (b). On the other hand, when win/defeat flag F is "0" (in other words, when the right to participate is given), the image displayed on the liquid crystal displaying unit of mobile unit MS shifts from the above mentioned image (a) of Fig.11 to image (c).

Then as the user of mobile unit MS hits the "Jump" button by using the command inputting unit while image (c) of Fig.11 is displayed, the controlling unit of mobile unit MS transmits GET request D7 to which the mobile unit ID of mobile unit MS is attached to mobile packet communication network MPN (Step S9). As a result, the process of Step S10 to Step S14 of Fig.6 is executed in the communication system.

Thus, in the communication system of the present modification, whether to give the right to participate is determined after the mobile unit application is transmitted to the user of mobile unit MS. Therefore, the "win application" and the "defeat application" do not need to be prepared as mobile applications, and the cost for developing the mobile unit application can be decreased.

### [2] Second Embodiment

The communication system of the present embodiment is achieved by the same configuration as above mentioned Fig.1. Therefore, each facility shown in Fig.1 achieves the same function as the above mentioned first embodiment unless a special explanation is provided.

The communication system of the above mentioned first embodiment narrowed down the participants at participation application server PS in accordance with the above mentioned narrowing method a, b and so forth. As opposed to this, the communication system of the present embodiment determines whether to give the right to participate to each user without narrowing down the participants at participation application server PS.

Hereafter, in the configuration of the communication system of the present embodiment to achieve this function, only the points which differ from the above mentioned first embodiment will be explained.

First, in the present embodiment, the mobile unit application participation application server PS retains, is equipped with the function of providing mobile unit MS with the function of performing user authentication when it is executed by mobile unit MS as in the above mentioned first embodiment and causes an event such as slots to occur in mobile unit MS. A number of different events can occur in mobile unit MS as the mobile unit application is executed as in the first embodiment, but the present embodiment will also be explained with slots in order to make the explanation concise.

The mobile unit application is set up for each program as the mobile unit application of the above mentioned first embodiment, and as participation application is carried out by using the participation application page, the mobile unit application corresponding to the program will be transmitted to mobile unit MS from participation application server. Also, the mobile unit application consists of a function in which a telephone number is an independent variable. As mobile unit MS executes the application, the telephone number of mobile unit MS is substituted for this function, and consequently the "win" or the "defeat" result can be obtained. The function for the "win" result to occur is set at constant odds in this process. Therefore, by transmitting the mobile unit application to the users of mobile unit MS who applied for participating in the program, narrowing the number of participants becomes possible.

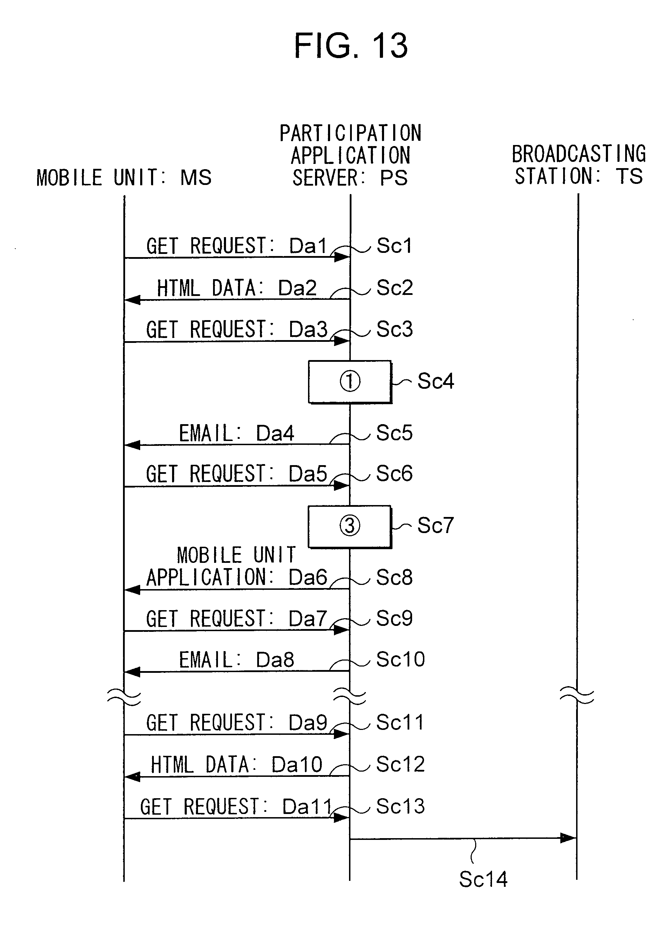

Next, the operation for a user of mobile unit MS (in other words, the audience) to participate in the program broadcast from broadcasting station TS in the communication system of the present embodiment will be explained by referring to Fig.13. In the explanation below, the mobile unit ID of the user who applies for participating will be "MS1", and the memory contents of timetable TBL1 will be the same as that given in Fig.3 for the explanation to be more specific.

First, a user who wishes to participate in the program corresponding to program code "#0001" executes the WWW browser by using the command inputting unit of mobile unit MS (figure is omitted). Then the controlling unit of mobile unit MS (figure is omitted) reads out the WWW browser from the above mentioned memory and carries out packet registration to the above mentioned packet subscriber processing unit of mobile packet communication network MPN.

Hereafter, in the communication system of the present embodiment, the same process as the above mentioned Step S1 to S6 of Fig.6 will be carried out in Step Sc 1 to Step Sc 6. In Step Sc 4 of Fig.13, the same process as the above mentioned Fig.8 will be executed as Step S4 of Fig.6.

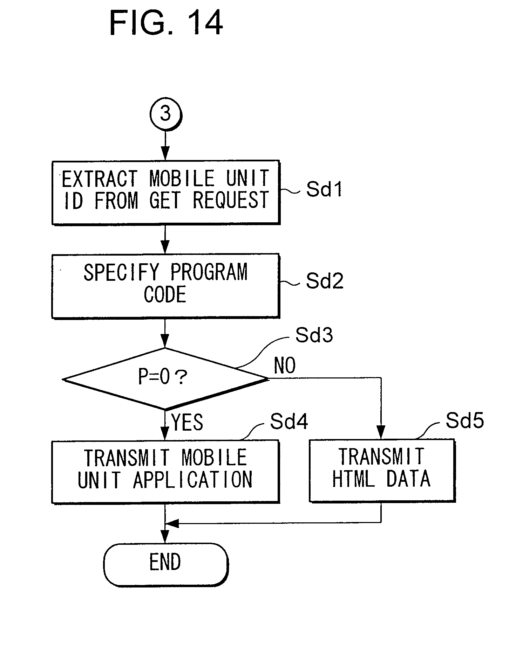

As GET request Da5 is transmitted from mobile unit MS in this manner, system controlling unit 11 of participation application server PS executes the process shown in Fig.14 in Step Sc7.

In this process, system controlling unit 11 of participation application server PS first extracts mobile ID "MS1" attached to received GET request Da5 (Fig.14 Step Sd1) and stored in RAM. Then, system controlling unit 11 extracts the download URL contained in GET request Da5 and specifies program code "#0001" (Fig.14 Step Sd2). Then system controlling unit 11 reads out the application parameter corresponding to mobile unit ID "MS1" in applicant DB 15-k corresponding to the program code "#0001" and determines whether the value of application parameter P is "0" (Fig.14 Step Sd3).

Then as a result, if it is determined that the value of application parameter P is not "0" in other words to be "No", system controlling unit 11 produces HTML data in which a letter string such as "The application has been downloaded once already" is written, and transmits the HTML data to Internet INET (Fig.14 Step Sd5) and concludes the process. As a result of this process, the image stating that the downloading has already been carried out by the user is displayed in mobile unit MS in accordance with the HTML data.

On the other hand, if it is determined that the value of parameter P is "0", in other words to be "Yes" in Step Sd3, system controlling unit 11 transmits mobile unit application Da6 corresponding to program code "#0001" to Internet INET (Fig.14 Step Sd4 and Step Sc8). As in the above mentioned first embodiment the password transmitted by participation application server is retained by mobile unit application Da6 controlling unit 11.

Thus, mobile unit application Da6 corresponding to program code "#0001" transmitted from participation application server PS is forwarded to mobile packet communication network MPN by gateway server GWS and is received by mobile unit MS.

Then, the controlling unit of the mobile unit (figure is omitted) stores the received mobile unit application Da6 in the downloaded application storage domain of the above mentioned memory. At this stage, the user of mobile unit MS executes mobile unit application Da6 by using the command inputting unit of mobile unit MS. Then, the controlling unit of mobile unit MS executes mobile unit application Da6 stored in memory and displays the image to prompt the input of password on the liquid crystal displaying unit in accordance with mobile unit application Da6.

At this stage, as the user inputs the password he/she set up, the controlling unit of mobile unit MS determines whether the password retained by mobile unit application Da6 and the password the user inputted accord. Then as a result of the determination, the controlling unit of mobile unit MS displays a letter string such as "The password is wrong" on the liquid crystal displaying unit if the passwords do not accord.

On the other hand, if the passwords accord, the controlling unit of mobile unit MS executes the process to cause an event to occur. As a result, an image shown in image (a) of Fig.11 is displayed on the liquid crystal displaying unit of mobile unit MS (figure is omitted).

At this stage, as the user hits the "Start" button by using the command inputting unit of mobile unit MS (figure is omitted), the slots displayed on the liquid crystal displaying unit begin to revolve. Then, as the user stops the slots by using the command inputting unit, the controlling unit of mobile unit MS determines whether to cause the "win" result by substituting its telephone number for the function consisting mobile unit application Da6 which is being executed. As a result of this determination, if the controlling unit of mobile unit MS determines to cause a "defeat" result, the controlling unit of mobile unit MS displays image (b) of Fig.11 on the liquid crystal displaying unit.

On the other hand, if it is determined for a "win" result to be caused, the controlling unit of mobile unit MS displays image (c) of Fig.11 on the liquid crystal displaying unit. The "Jump" button displayed on the liquid crystal displaying unit of mobile unit MS contains the URL to which program code "#0001" is attached as CGI parameter. Therefore, during this process, as the user of mobile unit MS hits the "Jump" button by using the command inputting unit of mobile unit MS, the controlling unit of mobile unit MS transmits GET request Da7 which contains the URL corresponding to the "Jump" button to mobile packet communication network MPN (Step Sc9). At this stage, the controlling unit of mobile unit MS transmits GET request Da7 after attaching mobile unit ID "MS1" to the GET request.

Thus, as GET request Da7 transmitted from mobile unit MS is received by communication unit 12 of participation application server PS, system controlling unit 11 extracts mobile unit ID "MS1" attached to GET request Da7; stores it in RAM; and specifies program code "#0001" based upon the URL contained in GET request Da7. Then, system controlling unit 11 stores "0" in the field corresponding to mobile unit ID "MS1" in applicant DB 15-k corresponding to program code "#0001" as win/defeat flag F, and switches application parameter P corresponding to the mobile unit ID to "1."

As this process ends, system controlling unit 11 of participation application server PS reads out email address "○○@ΔΔ.ne.jp" corresponding to the mobile unit ID from applicant DB 15-k, produces email Da8 addressed to the email address "○○@ΔΔ.ne.jp", and transmits the email message (Step Sc 10). At this stage, system controlling unit 11 attaches the URL corresponding to the program participation page to email Da8.

On the other hand, email Da8 transmitted by participation application server PS is received by gateway server GWS, which is then transmitted to mobile unit MS and stored in the mail storage domain of the above mentioned memory by the controlling unit of mobile unit MS. At this stage, the user of mobile unit MS needs to wait until the start time of the program to which he/she applied for participating.

Hereafter, at the backend of the reception time corresponding to receiving time information on this program, system controlling unit 11 of participation application server PS switches every application parameter P stored in applicant DB 15-k corresponding to the program to "2" and concludes the participation application. Then, system controlling unit 11 transmits all personal information stored in applicant DB 15-k corresponding to the program to broadcasting station TS via broadcasting station interface unit 13.

On the other hand, when the broadcasting is about to begin, and the user who won the right to participate performs the inputting operation for displaying email Da8 by using the command inputting unit of mobile unit MS, the controlling unit of mobile unit MS reads out email D8 stored in the mail storage domain and displays it on the liquid crystal displaying unit.

As a result, the "Jump" button along with a letter string such as "You can go to the participation screen by hitting the 'Jump' button" is displayed on the liquid crystal displaying unit. At this stage, by hitting the "Jump" button, the URL corresponding to HTML data of the above mentioned program participation page is designated. Therefore, the user can obtain HTML data of the program participation page corresponding to the program to which he/she applied for participating by hitting the "Jump" button.

At this stage, as the user hits the "Jump" button by using the command inputting unit of mobile unit MS, the controlling unit of mobile unit MS transmits GET request Da9 which contains the URL corresponding to the participation application page of the program corresponding to program code "#0001" (Step Sc11). As a result, in the communication system, the same process as in Step S12 and Step S14 shown in Fig.6 explained in Step Sc12 and Step Sc14 of Fig.13 is executed.

Thus, in the present embodiment, whether to give the right to participate to a user is determined by the mobile unit by transmitting the mobile unit application by which the "win" result occurs at constant odds. Hence, instead of narrowing down the participants at participation application server PS, the mobile unit can narrow down the participants. As a result, the processing burden on the participation application server can be decreased.

### [3] Third Embodiment

The communication system of the present embodiment is achieved by the same configuration as in above mentioned Fig.1. Hence, each facility shown in Fig.1 will achieve the same function as the above mentioned first embodiment unless a special explanation is provided.

The communication systems of the above mentioned first and second embodiments determined whether to give the right to participate without taking into account the effort of the user who applied for participating in the program. As opposed to the above two embodiments, by the communication system of the present embodiment, the user can win the right to participate by his/her effort.

For achieving this function, participation application server PS of the present embodiment, for instance, transmits a mobile unit application to cause an event to occur such as a shooting game in mobile unit MS. The mobile unit application is equipped with the function of prompting the user to play the game when it is executed by mobile unit MS, and transmitting the score of this game to participation application server PS.

Then participation application server PS counts the scores transmitted from mobile unit MS and determines whether to give the right to participate to each user. In particular, participation application server PS gives the right to participate to a specific number of users out of the users with highest game scores transmitted from mobile unit MS. Also in the present embodiment, the mobile unit application provides mobile unit MS the function of authenticating the user.

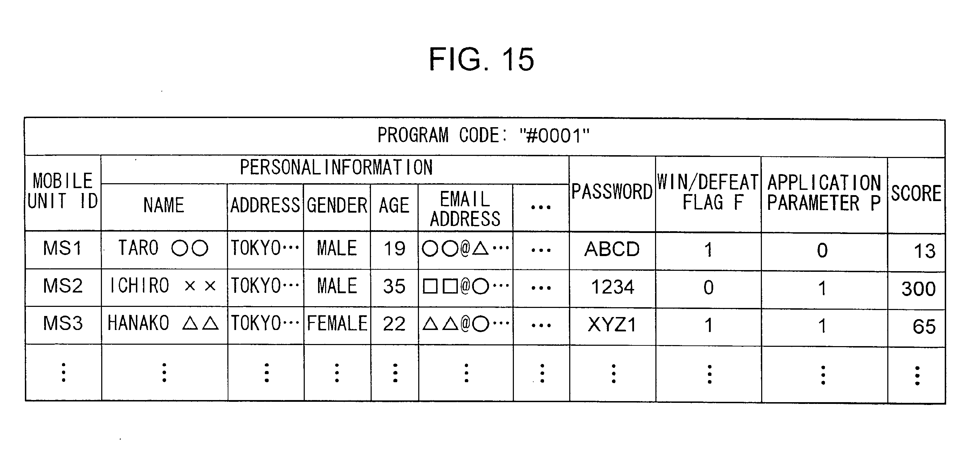

For achieving this function, memory contents of applicant DB 15-k of participation application server PS is changed as shown in Fig.15 in the present embodiment. As shown in this figure, a field for storing the scores transmitted from mobile unit MS corresponding to mobile unit ID is present, in addition to the fields for storing each piece of information shown in the above mentioned Fig.4 in applicant DB 15-k of the present embodiment.

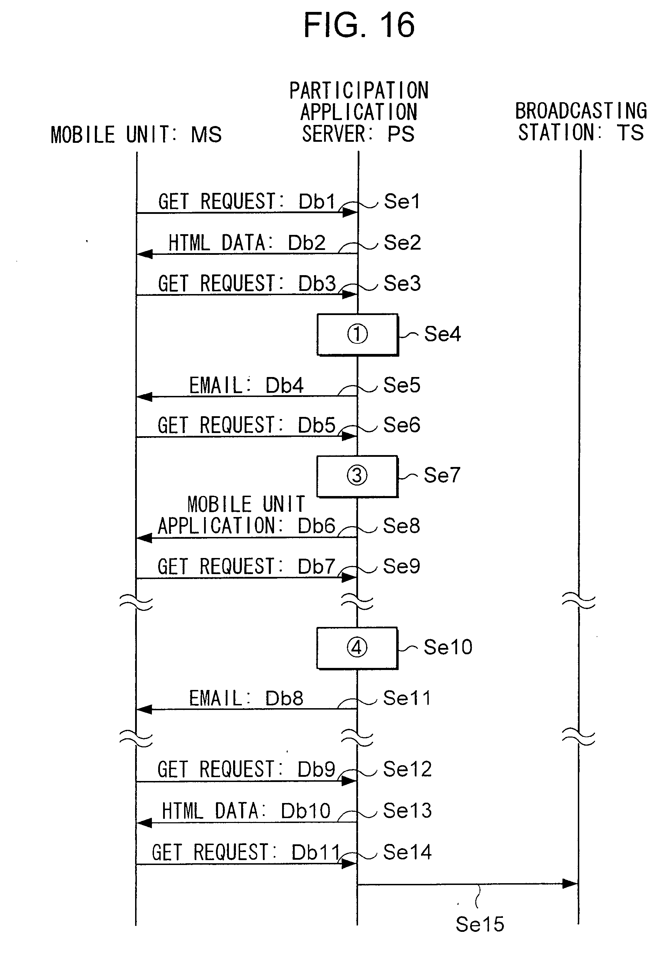

Next, operations of the user of mobile unit MS (in other words, the audience) for participating in the program broadcast by broadcasting station TS in the communication system of the present embodiment will be explained by referring to Fig.16. In the explanations below, the mobile unit ID of mobile unit MS of the user who applies for participation will be "MS1", and the memory contents -of timetable TBL1 will be the same as in Fig.3 in order to make the explanations more concise.

First, a user wishing to participate in the program corresponding to program code "#0001" performs the inputting operation to execute the WWW browser by using the command inputting unit of mobile unit MS (figure is omitted). Then, the controlling unit of mobile unit MS (figure is omitted) reads out the WWW browser from the above mentioned memory and performs packet registration to the above mentioned packet subscriber processing unit of mobile packet communication network MPN.

Hereafter, in the communication system of the present embodiment, the same process as Step Sc1 to Sc8 of the above mentioned Fig.13 is executed in Step Se1 to Step Se8 of Fig.16, and mobile unit application Db6 is transmitted to mobile unit MS. The same process as the above mentioned Fig.8 is executed in Step Se4 of Fig.16, and the same process as the above mentioned Fig.14 is executed in Step Se7 of Fig.16.

As mobile unit application Db6 corresponding to program code "#0001" is transmitted after the above mentioned process was executed, the controlling unit of mobile unit MS (figure is omitted) stores mobile unit application Db6 in the downloaded application storage domain of the above mentioned memory. At this stage, the user of mobile unit MS performs the inputting operation for executing mobile unit application Db6 by using the command inputting unit of mobile unit MS. Then the controlling unit of mobile unit MS executes mobile unit application Db6 stored in memory and displays the image for prompting the input of the password on the liquid crystal displaying unit in accordance with mobile unit application Db6.

At this stage, as the user inputs the password he/she set up, the controlling unit of mobile unit MS determines whether the password mobile unit application Db6 retains and the password the user inputted accord. Then, as a result of this determination, the controlling unit of mobile unit MS displays a letter string such as "The password is wrong" on the liquid crystal displaying unit when the passwords do not accord.

On the other hand, when the passwords accord, the controlling unit of mobile unit MS executes the process for causing an event to occur. As a result, an image for carrying out a shooting game and so forth is displayed on the liquid crystal displaying unit of mobile unit MS.

At this stage, the user needs to play a game (for instance, a shooting game) by operating the command inputting unit of mobile unit MS (figure is omitted). Then, as the game ends, the "Transmit" button is displayed on the liquid crystal displaying unit of mobile unit MS.

To the "Transmit" button displayed on the liquid crystal displaying unit of mobile unit MS, the URL which contains program code "#0001" as CGI parameter is attached. Hence in this state, as the user of mobile unit MS hits the "Transmit" button by using the command inputting unit of mobile unit MS, the controlling unit of mobile unit MS transmits GET request Db7 containing the URL attached to the "Transmit" button to mobile packet communication network MPN (Step Se9). At this stage, the controlling unit of mobile unit MS adds mobile unit ID "MS1" of mobile unit MS to GET request Db7as well as the score earned by the user by playing the game.

On the other hand, as GET request Db7 transmitted from mobile unit MS is received by communication unit 12 of participation application server PS, system controlling unit 11 extracts the mobile unit ID and the score added to GET request DB7 and stores in RAM. Then, system controlling unit 11 stores the score which is stored in RAM in the field corresponding to mobile unit ID "MS1" in applicant DB 15-k of program code "#0001" corresponding to the URL contained in GET request Db7.

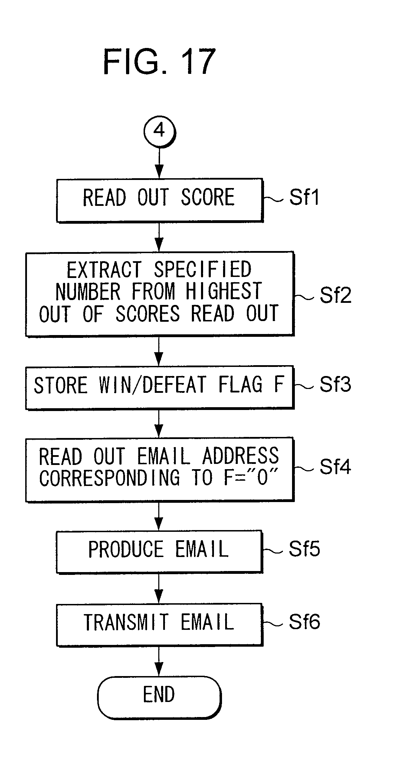

System controlling unit 11 executes the narrowing process for the program participants shown in Fig. 17 at the backend of reception time "9:00 AM of May 20th, 2001" of receiving time information corresponding to program code "#0001" which corresponds to the program in broadcasting timetable TBL1 after the above process ends. In this process, system controlling unit 11 first reads out every score stored in applicant DB 15-k corresponding to program code "#0001" (Fig.17 Step Sf1) and extracts the specific number from the highest out of these scores read out (in other words, the number of participants) (Fig.17 Step Sf2).

Then system controlling unit 11 stores "0" as win/defeat flag F in the fields corresponding to the extracted scores in Step Sf2 in applicant DB 15-k (Fig.17 Step Sf3). At this stage, system controlling unit 11 stores "1" as win/defeat flag F in fields which are different from the fields corresponding to these scores.

Thus, as win/defeat flag F is stored in applicant DB 15-k, system controlling unit 11 checks applicant DB 15-k, reads out email addresses (for instance, "○○@ΔΔ.ne.jp") stored in the fields which correspond to "0" of win/defeat flag F (Fig.17 Step Sf4), produces email Db8 addressed to these email addresses (Fig.17 Step Sf5), and transmits (Fig.17 Step Sf6 and Step Se11). At this stage, system controlling unit 11 attaches the URL of the program participation page of the program corresponding to program code "#0001" to email Db8.

On the other hand, email Db8 transmitted by participation application server PS is received by gateway server GWS, transmitted to mobile unit MS and stored in the mail storage domain of the above mentioned memory by the controlling unit of mobile unit MS. At this stage, the user of mobile unit MS needs to wait until the start time of the program which he/she applied for participating.

Hereafter, system controlling unit 11 of participation application server PS switches each application parameter P stored in applicant DB 15-k corresponding to the program to "2" at the backend of reception time corresponding to the receiving time information of this program, clears off all the scores and concludes the participation application. Then, system controlling unit 11 transmits all personal information stored in applicant DB 15-k corresponding to the program to broadcasting station TS via broadcasting station interface unit 13.

On the other hand, as the user who won the right to participate performs the inputting operation to display email Da8 by using the command inputting unit of mobile unit MS, the controlling unit of mobile unit MS reads out email D8 stored in the mail storage domain and displays the email on the liquid crystal displaying unit. As a result, the "Jump" button along with a letter string such as "You can go to the participation screen by hitting the 'Jump' button" is displayed on the liquid crystal displaying unit of mobile unit MS.

At this stage, as the user hits the "Jump" button by using the command inputting unit of mobile unit MS, the controlling unit of mobile unit MS transmits GET request Db9 containing the URL corresponding to the participation application page (Step Se12). As a result, the same process as in the above mentioned Step Se12 to Step Sc14 shown in Fig.13 is executed in Step Se13 to Step Se15 of Fig.15 in the communication system.

Thus, in the present embodiment, whether to give the right to participate to each user is determined on the basis of the scores of the game played by the users. Therefore, users can win the right to participate through their own efforts. Consequently, it becomes possible to give each member of the audience a fair opportunity to participate in the program.

In the present embodiment, a shooting game is shown as an example of an event which occurs in mobile unit MS by executing the mobile unit application, but various other events can also be made to occur. For instance, the participants of the program can be determined by a "quick push" of the button installed in the command inputting unit of mobile unit MS. In this case, the user pushes the button of the command inputting unit during the specified amount of time when the mobile unit application is executed in mobile unit MS. Then, the controlling unit of mobile unit MS counts the number of times the button was pushed, and transmits the counted number to participation application server PS as the score.

### Effects of Invention

The present invention makes it possible to stimulate users' desire to participate in a program because of the entertaining nature of the application procedure followed by users in order to win the right to participate in a program; as well as the utilization of the skill and effort of a user as the basis for selecting participants, rather than selecting participants at random.

## Claims

1. A program participant narrowing method comprising:
a participation application process for transmitting a user participation application for a program from a communication terminal to a server;
a narrowing process for determining by at least one of said communication terminal or server whether to allow said user to participate in said program;
an application program transmitting process for transmitting from said server to said communication terminal which transmitted said participation application, an application program providing entertainment to said user; and
a process for a communication terminal of a user allowed to participate in said program in said narrowing process for obtaining from said server address information required for participating in said program.

2. A program participant narrowing method according to Claim 1,
wherein said narrowing process is executed before said application program transmitting process, and said server transmits to said communication terminal, in said application program transmitting process, an application program for providing said user with an entertaining activity containing a win/defeat outcome corresponding to a determination of said narrowing process followed by said user.

3. A program participant narrowing method according to Claim 1,
wherein a decision is made during said narrowing process, to allow a user to participate in said program if he/she meets a specific requirement.

4. A program participant narrowing method according to Claim 2,
wherein said server attaches address information showing an address of information required for participating in said program, to said application program when said server transmits to said communication terminal during said application program transmitting process an application program providing an entertaining activity containing a win/defeat outcome corresponding to a decision to allow said user to participate in said program.

5. A program participant narrowing method according to claim 1,
wherein said narrowing process carried out in said server comprises:
a process for said communication terminal which receives an application program transmitted during said application program transmitting process, to obtain from said sever, the decision made during said narrowing process; and
a process for said communication terminal for providing said user with an entertaining activity containing a win/defeat outcome corresponding to content determined on the basis of said application program received, from said server, and displaying address information showing an address of information necessary for participating in said program when it provides said user with an entertaining activity containing a win /defeat outcome corresponding to a decision to allow participating in said program.

6. A program participant narrowing method according to Claim 1,
wherein said server selects users for participating in a program at random.

7. A program participant narrowing method according to Claim 1,
wherein said application program comprises data providing a user with entertaining activities with different outcomes depending on the content of parameter set up, and said narrowing process comprises:
a process for providing said user with an entertaining activity by executing said application program by setting up information retained by said communication terminal as said parameter;
a process for said communication terminal for transmitting data corresponding to an outcome of said entertaining activity to said server; and
a process for said server for making a decision on whether to allow said user to participate in said program on the basis of data transmitted from said communication terminal.

8. A program participant narrowing method according to Claim 1,
wherein said application program comprises data providing a user with a game which proceeds when a particular operation is performed through said communication terminal as said entertaining activity, and said narrowing process comprises:
a process for said communication terminal for carrying out said game on the basis of an operation performed through said application program and said communication terminal;
a process for said communication terminal for transmitting data corresponding to an outcome of said game to said server; and
a process for said server for determining whether to allow said user to participate in said program on the basis of data transmitted from said communication terminal.

9. A program participant narrowing method according to Claim 1,
wherein said communication terminal transmits said participation application with personal information on a user of said communication terminal during said participation application transmitting process.

10. A program participant narrowing method according to Claim 7 further comprising:
a personal information outputting process carried out after said participation application transmitting process by said server, for outputting personal information transmitted from said communication terminal which is added to said participation application during said participation application transmitting process to outside.

11. A program participant narrowing method according to Claim1,
wherein said communication terminal is a cellular telephone which performs communication with said server via a mobile communication network.

12. A server comprising:
a communication unit; and
a controlling unit for receiving participation application for a program from a communication terminal via said communication unit, making a decision on whether to allow a user of said communication terminal to participate in said program, transmitting an application program for providing a user with an entertaining activity containing an outcome corresponding to a decision to reject participation from said communication unit to said communication terminal when it makes a decision to reject participation, and providing a user with an entertaining activity containing an outcome corresponding to a decision to permit participation and transmitting an application program containing access information showing an address of information required for participating in said program from said communication unit to said communication terminal when it makes a decision to allow participation.

13. A server according to Claim 10,
wherein said controlling unit determines whether to allow participation in said program depending on whether a user of said communication terminal meets a predetermined requirement.

14. A server comprising:
a communication unit; and
a controlling unit for receiving participation application for a program from a communication terminal via said communication unit; transmitting an application program, when information of a decision on whether participating in said program is allowed is given, for providing a user of said communication terminal with an entertaining activity containing an outcome corresponding to this decision, and making a use of access information showing an address of information required for participating in said program possible when this information of a decision shows permission for participating in said program; deciding whether to allow said user to participate in said program when a request for said information of decision is received from said communication terminal via said communication unit, and transmitting that outcome to said communication terminal as said information of decision.

15. A server according to Claim 12,
wherein said controlling unit determines whether to allow participating in said program depending on whether a user of said communication terminal meets a predetermined requirement.

16. A server comprising:
a communication unit; and
a controlling unit for receiving participation application for a program from a communication terminal via said communication unit, making a decision on whether to allow or refuse participation in said program on the basis of a parameter retained by said communication terminal; providing a user of said communication terminal with entertaining activity yielding an outcome corresponding to the decision to give or refuse said user permission to participate, and further transmitting an application program for acquisition of information required for participating in said program from said communication unit to said communication terminal when participation is allowed.

17. A server comprising:
a communication unit; and
a controlling unit for transmitting from said communication unit to said communication terminal an application program for carrying out a game in response to an operation performed through said communication terminal when participation application for a program is received from a communication terminal via said communication unit, making a decision on whether to allow a user of said communication terminal to participate in said program on the basis of an outcome of said game when said outcome of said game is received from said communication terminal via said communication unit, and transmitting address information showing an address of information required for participating in said program from said communication unit to said communication terminal when participation is allowed.
